# EUROPEAN PATENT APPLICATION

(11) **EP 1 048 418 A2**
(43) Date of publication of application: **02.11.2000**
(21) Application number: 00660070.4
(22) Date of filing: 18.04.2000
(51) Int. Cl.: B26D 7/06, B26D 3/16, B23D 21/00, B23D 3/02

(54) **Non-chipping cutter apparatus for a pipe or shaft**

(30) Priority: 19.04.1999 FI 990872
(71) Applicant: T-DRILL OY, 66401 Laihia (FI)
(72) Inventor: Haavisto, Kari, 65100 Vaasa (FI); Virtanen, Jari, 66400 Laihia (FI); Lehto, Pertti, 66400 Laihia (FI)
(74) Representative: LEITZINGER OY

(57) **Abstract**

The invention relates to a non-chipping cutter apparatus for a pipe or a shaft. The pipe or shaft is cut by means of a rotatable cutting head (4), including at least one sharp-edged cutting wheel (5) pushed toward a centre axis of rotation (A) as the cutting head (4) is rotating. In order to minimize reject pieces, a distance (m) between gripping clamps (6, 7) present on either side of a cut-off point is as short as possible, preferably no more than about 50 mm. The minimization of reject pieces also requires a possibility of automatically adjusting the feed length of a pipe (1) to be cut, which is provided by the invention.

## Description

The present invention relates to a non-chipping cutter apparatus for a pipe or a shaft, comprising
- a reciprocally operable feeding device for a pipe or a shaft
- a front stop and a rear stop, the distance therebetween determining a length for the feeding range which is adjustable by displacing the rear stop forward or rearward in the feeding direction of a pipe
- gripping clamps on either side of a pipe or shaft cut-off point
- a rotatable cutting head, having at least one sharp-edged cutting wheel which is adapted to travel toward a centre axis of rotation for partially cutting the pipe or shaft as the cutting head is rotating
- a pulling device for working the downstream gripping clamp back and forth in axial direction, such that the pipe or a shaft, which is just partially cut, can be severed completely as desired by the application of a tensile force between the gripping clamps.

This type of cutter apparatus is prior known. In this prior known apparatus, the distance between gripping surfaces is more than 100 mm and the feeding length of a pipe to be cut off must be adjusted manually. Such features result inevitably in a substantial amount of reject pieces.

The Patent publication US-4,281,530 discloses a cutter apparatus, whereby a desired cut length can be readily altered in unison with forming functions.

The invention set forth in the Patent publication DE-4,434,016 deals with the fact that the tail end of a pipe length last to be cut can be exploited as thoroughly as possible by-operating displaceable clamp members to feed the last pipe length further away than what would be possible by means of the actual feeding device.

According to the invention, it has been realized that the amount of reject can be minimized by having a distance between the gripping surfaces of gripping clamps less than 100 mm, preferably less than 70 mm, most preferably no more than 50 mm, and by adapting the displacement of a rear stop determining the feeding length to be adjustable by means of an automatically controlled drive. By virtue of the combination of these features, even a single pipe can be divided optimally in sections of varying lengths in such a way that the otherwise reject-bound tail end of a pipe is turned into cut-to-size pipe sections, whose length complies with that suitable for other order sets.

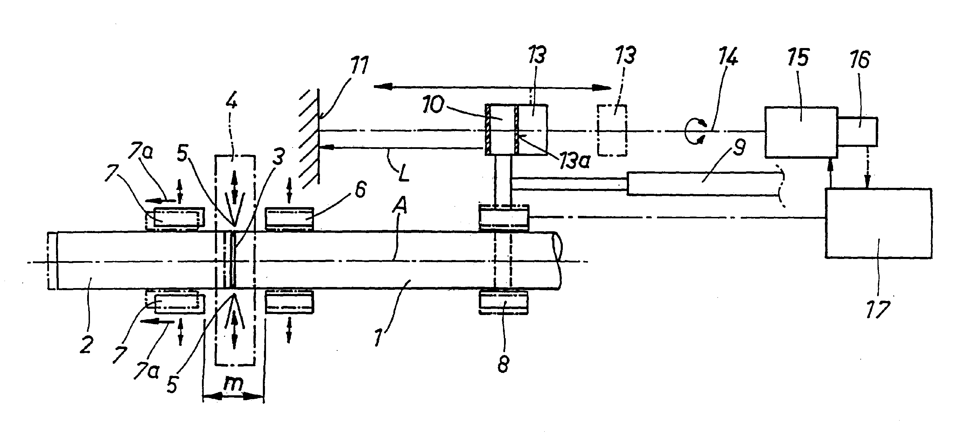

The invention will now be described in more detail by way of an exemplary embodiment with reference to the accompanying drawing, which shows schematically a cutter apparatus of the invention. The end of a pipe 1 is cut off to form a piece 2 of a desired length by means of a rotatable cutting head 4, including at least one sharp-edged cutting wheel 5 adapted to be displaceable by means of a power unit (not shown) toward a centre axis of rotation A as the cutting head 4 is rotating. One of the illustrated cutting wheels 5 may be a forming roll, which works the material drawn up from a cut-off point 3 by the cutting wheel 5 back toward the outer surface level of the pipe 1, 2.

On either side of the cut-off point 5, 3 for a pipe or a shaft there are gripping clamps 6, 7, comprising e.g. sleeves constituted by segmented elements, which are adapted to be contractible and expansible by means of a power unit, not shown, so as to provide a grip and release with respect to the pipe 1, 2.

As the cutting head 4 is rotating, the cutting is not done all the way through but, instead, the cut-off point is left with a small web and the cutting is completed by means of a pulling device 7a (shown only schematically by an arrow) associated with the gripping clamp 7 for working the gripping clamp 7 back and forth in axial direction. Thus, the pipe or shaft 1, 2, which is only partially severed, can be cut off completely by means of a tensile force between the gripping clamps 6, 7 (the cut-off condition shown by dash-and-dot lines with regard to the gripping clamps 6, 7 and the pipe section 2). In some cases it is also possible to perform a cut-through with the cutting edge of the cutting wheel 5.

The rotatable cutting head 4 requires its own space, yet the distance between the gripping clamps 6, 7 should be made as short as possible for successfully completing the cutting by said pulling, i.e. for providing the clamp 7 with a solid grip on the cut-off pipe section 2. On the other hand, neither can the gripping clamp 6 be located too far from the cut-off point 3, so that the reject piece at the tail end of a pipe shall not be too long. It has been confirmed in practice that the cutting head 4 can be structurally designed in such a way that the distance between the gripping clamps 6, 7 will be even less than 50 mm. It is even possible to achieve a practically satisfactory result, if a distance m is less than 100 mm, or preferably less than 70 mm. At the same time, this naturally provides the advantage that the holding of a pipe or shaft at a cut-off point becomes more solid.

In order to be able to make pipe or shaft sections of varying lengths in sequential miscellaneous production, the pipe 1 must be provided with an automated feeding action to the cut-off point. In the invention, this has been implemented as follows. A gripper feed unit 8, which is adapted to be movable back and forth by means of a pneumatic cylinder 9, travels through a distance consistent with a desired cut length L between a front stop 11 and a rear stop 13. Reference numeral 13a is used to designate a surface of the rear stop, which a stopper 10 of the gripper feed unit 8 comes to contact with in its rearward position, wherein the grippers 8 engage the pipe 1 and move the pipe 1 forward through the distance L by the pushing action of the cylinder 9. At this point, the gripping clamps 6, 7 are in an open position.

The rear stop 13 has its displacement performed by means of an automatically controlled drive, comprising a rotatable feed screw 14, a motor 15 to rotate the screw 14, comprising a servomotor or some other motor, which has its rotation controlled on the basis of control data (feedback data) received from a position sensor 16 for the rear stop 13. In the present case, the position sensor 16 comprises a pulse sensor monitoring the rotation of the feed screw 14, yet it may also be a linear sensor mounted within the operating range of the rear stop 13. The position sensor 16 controls the drive motor 15 for the feed screw 14 through the intermediary of a control unit 17. The control unit 17 may also house a stack memory for the length of pieces to be cut, and a program for automatically calculating the various lengths L to be cut off the tail end of each pipe in order to minimize reject pieces.

## Claims

1. A non-chipping cutter apparatus for a pipe or a shaft, comprising
- a reciprocally operable feeding device (8, 9, 10) for a pipe or a shaft
- a front stop (11) and a rear stop (13, 13a), the distance therebetween determining a length (L) for the feeding range which is adjustable by displacing the rear stop (13) forward or rearward in the feeding direction of a pipe (1 )
- gripping clamps (6, 7) on either side of a pipe or shaft cut-off point (5, 3)
- a rotatable cutting head (4), having at least one sharp-edged cutting wheel (5) which is adapted to travel toward a centre axis of rotation (A) for partially cutting the pipe or shaft as the cutting head (4) is rotating
- a pulling device (7a) for working the downstream gripping clamp (7) back and forth in axial direction, such that the pipe or a shaft (1, 2), which is just partially cut, can be severed completely as desired by the application of a tensile force between the gripping clamps (6, 7),
**characterized** in that, in order to minimize reject pieces, a distance (m) between gripping surfaces of the gripping clamps (6, 7) is less than 100 mm, preferably less than 70 mm, most preferably no more than about 50 mm, and that the rear stop (13) has its displacement adapted to be adjustable by means of an automatically controlled (16, 17) drive (14, 15).

2. A cutter apparatus as set forth in claim 1, **characterized** in that the feeding device (8, 9, 10) comprises a gripper feed unit (8) operable by means of a pneumatic cylinder (9).

3. A cutter apparatus as set forth in claim 1 or 2, **characterized** in that the rear stop (13) is displaceable by means of a feed screw (14) adapted to be rotated by a servomotor (15) or some other motor, the drive of which is controlled on the basis of control data received from a position sensor (16) for the rear stop (13).

4. A cutter apparatus as set forth in any of claims 1-3, **characterized** in that the feed screw (14) has its rotation monitored by means of a pulse sensor (16), which controls the drive motor (15) for the feed screw (14) through the intermediary of a control unit (17).

5. A cutter apparatus as set forth in any of claims 1-4, **characterized** in that the control unit (17) for the automatically controlled drive (14, 15) houses a memory for the lengths of pieces to be cut, and a program for automatically calculating the various lengths (L) to be cut off the tail end of each pipe in order to minimize reject pieces.
